# EUROPÄISCHE PATENTANMELDUNG

(11) **EP 2 634 291 A2**
(43) Veröffentlichungstag der Anmeldung: **04.09.2013**
(21) Anmeldenummer: 13156606.9
(22) Anmeldetag: 25.02.2013
(51) Int. Cl.: C25B 11/02, C25B 11/04, C02F 1/461, G01N 27/26

(54) **Elektrolysezelle und Verfahren zu ihrer Herstellung**

(30) Priorität: 29.02.2012 AT 500452012
(71) Anmelder: pro aqua Diamantelektroden Produktion GmbH & Co KG, 8712 Niklasdorf (AT)
(72) Erfinder: Schelch, Michael, 8600 Oberaich (AT); Staber, Wolfgang, 8600 Bruck an der Mur (AT); Hermann, Robert, 8600 Oberaich (AT); Wesner, Wolfgang, 1220 Wien (AT)
(74) Vertreter: Vinazzer, Edith

(57) **Zusammenfassung**

Die Erfindung betrifft eine Elektrolysezelle mit zumindest zwei elektrisch kontaktierbaren Elektroden - Anode und Kathode, aus elektrisch leitfähigen (dotierten) Partikeln (1).

Die Elektroden bestehen jeweils aus zumindest einem Partikel (1), welches in elektrisch nicht leitendem Material, aus diesem herausragend, verankert ist und mit einem Verschlusselement (4, 4', 14, 24) aus elektrisch leitendem Material in Kontakt steht, welches eine Öffnung (3') oder Vertiefung (3, 13, 23) in einem Basiskörper (2, 2', 12, 22) aus elektrisch nicht leitendem Material flüssigkeitsdicht ausfüllt.

Die Elektrolysezelle kann daher sehr klein und kompakt ausgeführt werden und kann als Tauch-oder als Durchflusszelle ausgelegt werden.

## Beschreibung

Die Erfindung betrifft eine Elektrolysezelle mit zumindest zwei Elektroden - Anode und Kathode - aus elektrisch leitfähigen (dotierten) Partikeln und Verfahren zu ihrer Herstellung.

Aus der EP-A 2 336 091 A ist eine Elektrolysezelle aus zwei zueinander parallel angeordneten, langgestreckt rechteckig ausgeführten Kontaktelektroden bekannt, zwischen welchen eine bipolare Diamantpartikelelektrode angeordnet ist. Aus Kunststoff bestehende Abstandhalter befinden sich zwischen jeder Kontaktelektrode und der Diamantpartikelelektrode. Die Kontaktelektroden können handelsübliche Elektroden aus Iridium/Ruthenium oder Platin-beschichtetem Titanblech, Graphitelektroden oder ebenfalls Diamantelektroden sein. Aus den Kontaktelektroden, den Abstandhaltern und der bipolaren Elektrode wird ein Elektrodenpaket gebildet, welches außenseitig in eine Kunstharzummantelung eingebettet wird. Zur Herstellung der Ummantelung wird die fertig konfektionierte Elektrolysezelle in eine Gussform eingebracht und ein ZweikomponentenKunstharz eingegossen. Nach dem Aushärten des Harzes wird die fertige Tauchzelle der Gussform entnommen.

Aus der WO 2007/116004 A2 ist eine Diamantelektrode bekannt, bei der eine Vielzahl von mit Bor dotierten Diamantpartikeln in eine Kunststoff-Trägerschicht derart eingebettet ist, dass die Diamantpartikel beidseitig der Trägerschicht freigelegt sind. Zur Herstellung dieser Elektrode werden zwei Kunststofffolien, zwischen welchen sich die Diamantpartikel befinden, unter Druck und Hitze aufeinander gepresst, sodass die Kunststofffolien aufschmelzen und die Diamantpartikel an den Folienaußenseiten freigelegt werden. Diese Diamantelektroden sind in unterschiedlichen Größen herstellbar, die sie für eine Vielzahl von Anwendungen besonders geeignet machen, insbesondere für die Trinkwasseraufbereitung und die Wasseraufbereitung von Badewässern aus Pools oder Schwimmteichen. Aus der WO 2010/029277 A1 ist eine Elektrode aus einem einzigen Bor dotierten Diamantpartikel bekannt, welches am Ende eines elektrisch isolierenden Glasröhrchens unter Freilassung eines Teils seiner Oberfläche flüssigkeitsdicht eingebettet ist. Das Diamantpartikel wird aus einem nach dem CVD (Chemical Vapour Deposition) -Verfahren hergestellten synthetischen Diamanten mittels Laser herausgeschnitten. Der aus einem Glasröhrchen herausstehende Teil der äußeren Oberfläche des Diamantpartikels wird auf eine spezielle Weise mit metallischen Nanopartikeln versehen. Diese Elektrode weist eine besonders gute Verwendung als Sauerstoff-Sensor für Flüssigkeiten mit unterschiedlichem pH auf.

Der Erfindung liegt die Aufgabe zugrunde, eine Elektrolysezelle der eingangs genannten Art zur Verfügung zu stellen, welche sich zur Desinfektion kleiner Wassermengen, insbesondere zur Aufbereitung von mit organischen Substanzen verunreinigtem Wasser in kleinen Mengen, insbesondere einer Menge von bis zu 5 Litern, sowie als Messzelle, insbesondere zur Messung des pH-Wertes und der elektrischen Leitfähigkeit von Wasser oder für amperometrische Messungen, etwa von freiem Chlor, in Wasser besonders gut eignet. Die Elektrolysezelle soll einfach aufgebaut, langlebig sowie leicht herstellbar sein.

Gelöst wird die gestellte Aufgabe erfindungsgemäß dadurch, dass die Elektroden jeweils aus zumindest einem Partikel bestehen, welches in elektrisch nicht leitendem Material, aus diesem herausragend, verankert ist und mit einem Verschlusselement aus elektrisch leitendem Material in Kontakt steht, welches eine Öffnung oder Vertiefung in einem Basiskörper aus elektrisch nicht leitendem Material flüssigkeitsdicht ausfüllt.

In erfindungsgemäß ausgeführten Elektrolysezellen werden Anode und Kathode jeweils von zumindest einem Partikel gebildet, welches in elektrisch nicht leitendem Material verankert ist und mit einem elektrisch leitendem Material in Kontakt steht, welches zur elektrischen Kontaktierung verwendet wird und sich in einer Öffnung oder Vertiefung eines Basiskörper befindet. Die Elektrolysezelle kann daher sehr klein und kompakt ausgeführt werden und kann als Tauch-oder als Durchflusszelle ausgelegt werden.

Die Erfindung betrifft ferner Verfahren zur Herstellung der Elektrolysezelle bzw. eines Bestandteiles der Zelle mit einer Elektrode. Bei einer Alternative des erfindungsgemäßen Verfahrens wird ein Basiskörper aus zumindest einem Polymer mit zumindest einer Vertiefung und mindestens einem durchgehenden Loch am Boden der Vertiefung erstellt, in jedem Loch wird ein elektrisch leitfähiges (dotiertes) Partikel platziert, wobei durch Druckausübung auf das Partikel und durch Erhitzen des Partikels das das Partikel umgebende Material des Basiskörpers erhitzt und aufgeschmolzen wird, sodass das Partikel im Basiskörper vorzugsweise flüssigkeitsdicht eingebettet wird und aus dem Loch herausragt, wobei anschließend die Vertiefung mit elektrisch leitendem, aushärtendem Material gefüllt wird.

Bei einer weiteren vorteilhaften Alternative des erfindungsgemäßen Verfahrens wird ein Basiskörper aus einem elektrisch nicht leitendem Material mit zumindest einer durchgehenden Öffnung hergestellt, in der Öffnung wird ein Verschlusselement aus einem elektrisch nicht leitendem Material flüssigkeitsdicht eingesetzt, welches Verschlusselement an der einen, die Öffnung verschließenden Fläche mit einer Folie aus einem elektrisch nicht leitenden Material verbunden ist, in welcher durch lokales Aufschmelzen zumindest ein elektrisch leitfähiges (dotiertes) Partikel in Kontakt mit dem elektrisch leitenden Material des Verschlusselementes und der Folie sowie aus der Folie herausragend vorzugsweise flüssigkeitsdicht verankert wird.

Die erfindungsgemäßen Verfahren gestatten eine einfache Herstellung der Elektrolysezelle gemäß der Erfindung.

Für viele Anwendungsfälle und eine gute Dauerhaltbarkeit ist es vorteilhaft, wenn das bzw. die Partikel im elektrisch isolierenden Material flüssigkeitsdicht verankert ist bzw. sind.

Das zumindest eine Partikel kann gemäß einer bevorzugten Ausführungsform der Erfindung im Basiskörper selbst verankert sein. Bei einer alternativen Ausführungsform ist das zumindest eine Partikel in einer mit dem Verschlusselement verbundenen Folie oder dergleichen verankert.

Bei einer bevorzugten Ausführungsform der Erfindung besteht jede Elektrode aus zwei separat verankerten Partikeln, welche mit dem gleichen, gemeinsamen Verschlusselement in Kontakt sind. Es können auch mehr als zwei Partikel, insbesondere bis zu fünf Partikel, die separat verankert sind, eine Elektrode bilden und mit einem einzigen, für alle Partikel gemeinsamen Verschlusselement in Kontakt stehen. Mehrere Partikel in den Elektroden gewährleisten eine höhere Leistungsfähigkeit der Elektrolysezelle bei nach wie vor sehr kleinen äußeren Abmessungen und einem kompakten Aufbau.

Für den Basiskörper kann eine Vielzahl von elektrisch nicht leitenden Materialien verwendet werden, beispielsweise Kunststoff, Keramik oder Glas. Unter "Kunststoff" werden vor allem ein oder mehrere Polymer(e) aus der Gruppe Polytetrafluorethylen (Teflon), Polyvinylidenfluorid (PVDF), Perfluoralkoxylalkan (PFA), fluoriertem Ethylenpropylen (FEP), Ethylen-Tetrafluorethylen (ETFE), Polyetheretherketon (PEEK), Polyethylen (PE), Polypropylen (PP), Polyvinylchlorid (PVC), Polymethylmethacrylat (PMMA), PET (Polyethylenterephtalat) oder Polyphenylensulfid (PPS) in Frage. Aus diesen Materialien kann ein langlebiger und stabiler Basiskörper hergestellt werden. Bei einer Ausführung mit einem Verschlusselement mit Folie kann diese ebenfalls aus diesen Materialien bestehen.

Zum Einbau bzw. Verankern des zumindest einen Partikels kann der Basiskörper für jedes Partikel mit einem Loch versehen werden, welches am Boden der im Basiskörper angeordneten Vertiefung ausgebildet ist. Diese Vertiefungen werden mit dem elektrisch leitenden Material des Verschlusselementes aufgefüllt.

Gemäß einem weiteren Merkmal der Erfindung eignet sich als elektrisch leitendes Material für das Verschlusselement ein elektrisch leitendes Harz, insbesondere ein Epoxidharz, welches zumindest einen elektrisch leitenden Füllstoff enthält, oder ein elektrisch leitender Kleber, insbesondere ein Epoxidkleber, welcher ebenfalls zumindest einen elektrisch leitenden Füllstoff enthält.

Die Partikel sind gemäß einer bevorzugten Ausführungsform der Erfindung Diamantkörner, welche Durchmesser von 100 µm bis 500 µm, insbesondere von 200 µm bis 350 µm, aufweisen. Die Diamantkörner können Einkristalle sein, die am Markt als Industriediamanten erhältlich sind. Diese Diamantkörner sind unregelmäßig gestaltet. Die Diamantkörner können gemäß der Erfindung jedoch auch ausgeschnittene Teilchen einer gemäß dem CVD-Verfahren hergestellten Diamantelektrode sein. Im Gegensatz zu Industriediamanten können diese Diamantteilchen definierte Gestalt und daher definierte Durchmesser aufweisen.

Die Partikel können ferner TiO₂-Kristallpartikel sein, welche Korngrößen zwischen 300 µm und 5mm, insbesondere bis zu 2 mm, aufweisen.

Zur elektrischen Kontaktierung der Partikel kann im Verschlusselement ein Kontaktelement, beispielsweise ein Draht, ein Stift oder dergleichen, mit seinem einen Ende verankert bzw. gehalten sein.

Als zusätzliche Maßnahme kann vorgesehen sein, die Partikel jeweils mit einem elektrischen Leiter, beispielsweise einem Draht, zu verbinden und diesen Draht mit dem erwähnten Stift in Verbindung zu bringen, bevor das Verschlusselement als Hinterfüllung eingebracht wird.

Bei einer bevorzugten Ausführungsform der Erfindung sind die aus jeweils zumindest einem Partikel bestehenden Elektroden in einem einzigen Basiskörper angeordnet, welcher beispielsweise in der Form eines Plättchens oder einer Scheibe ausgeführt ist. Auf diese Weise entsteht eine sehr kleine und kompakt gestaltete Elektrolysezelle.

Bei einer weiteren vorteilhaften Ausführungsform der Erfindung ist der Basiskörper als Ring, Hülse oder dergleichen mit einer mittigen Öffnung bzw. einem mittigen Durchflusskanal ausgeführt, wobei die die Elektroden bildenden Partikel in den Durchflusskanal hineinragend im Basiskörper oder im Verschlusselement verankert sind. Eine derart ausgeführte Elektrolysezelle ist als Durchflusszelle konzipiert, was für verschiedene Anwendungsfälle besonders günstig ist.

Erfindungsgemäße Elektrolysezellen können in einem einzigen Basiskörper jeweils ein oder mehrere Elektrodenpaar(e) beinhalten. Optional ist es auch möglich, eine Anode oder mehrere Anoden in einem separaten Basiskörper sowie eine Kathode oder mehrere Kathoden - in gleicher Anzahl zu den Anoden - in einem anderen separaten Basiskörper anzuordnen. Die Basiskörper können dann beispielsweise in eine gemeinsame Halterung eingesetzt sein. Alternativ können mehrere Basiskörper, die jeweils eine Anode und eine Kathode beinhalten, zu Arrays zusammengesetzt werden.

Besonders vorteilhaft ist es, den Basiskörper aus aufschmelzbarem Kunststoff herzustellen. Dadurch ist die Möglichkeit gegeben, das Material des Basiskörpers um die Partikel herum zu erhitzen und aufzuschmelzen und derart ein flüssigkeitsdichtes Verankern der Partikel im Basiskörper auf einfache Weise zu gewährleisten.

Ein Kunststoff-Basiskörper kann im Spritzguss hergestellt werden, wobei gleichzeitig das Loch bzw. die Löcher und die Vertiefung(en) bzw. die Öffnung(en) beim Spritzgießen erstellt werden können. Alternativ ist es möglich, die Vertiefung(en) und das Loch bzw. die Löcher oder die Öffnung(en) durch eine mechanische Bearbeitung des Basiskörpers oder durch den Einsatz von Laser herzustellen.

Weitere Merkmale, Vorteile und Einzelheiten der Erfindung werden nun anhand der Zeichnung, die schematisch mehrere Ausführungsbeispiele darstellt, näher beschrieben. Dabei zeigen
Fig. 1 einen Querschnitt durch eine Ausführungsvariante der Anordnung bzw. Ausführung einer Elektrode einer erfindungsgemäßen Elektrolysezelle,
Fig. 2 einen Querschnitt durch eine weitere Variante einer Ausführung einer Elektrode einer erfindungsgemäßen Elektrolysezelle,
Fig. 3 einen Querschnitt einer anderen Ausführung einer Elektrode,
Fig. 4 eine Draufsicht auf eine Ausführungsform einer Elektrolysezelle gemäß der Erfindung,
Fig. 5 einen Schnitt entlang der Linie V-V der Fig. 4,
Fig. 5a das Detail X der Fig. 5 in vergrößerter Darstellung und
Fig. 6 eine weitere Ausführungsform einer Elektrolysezelle gemäß der Erfindung.

In einer Elektrolysezelle gemäß der Erfindung bestehen die Elektroden jeweils aus zumindest einem Partikel 1 aus elektrisch leitfähigem, dotiertem Diamant oder aus elektrisch leitfähigem, dotiertem TiO₂. Das Partikel 1 kann daher ein Diamantkorn sein, welches ein Diamant-Einkristall einer beliebigen äußeren Form mit Durchmessern zwischen 100 µm und 500 µm, insbesondere zwischen 200 µm und 350 µm, ist. Die im Rahmen der Erfindung vorzugsweise verwendeten Diamantkörner sind mit Bor oder mit Stickstoff, Phosphor, Arsen, Antimon, Niob, Lithium, Schwefel und Sauerstoff dotiert und sind vorzugsweise synthetisch hergestellte und am Markt erhältliche Industriediamanten, welche nach einem der üblichen Verfahren, beispielsweise dem Hochdruck-Hochtemperaturverfahren mit Metallkatalysatoren, hergestellt und während des Produktionsprozesses durch Einbringen des gewählten Dotierungselementes leitfähig gemacht sind. Alternativ können die Diamantkörner entsprechend kleine, die erwähnten Durchmesser besitzende Teilchen einer mittels des CVD (Chemical Vapour Deposition)-Verfahrens hergestellten Diamantelektrode sein. Die kleinen Teilchen werden mittels Laser ausgeschnitten. Die dotierten TiO₂-Kristallpartikel können gemäß einem der bekannten Verfahren zur Kristallzüchtung aus einer Schmelze hergestellt sein, beispielsweise gemäß dem Verfahren von Bridgman-Stockbarger. Die TiO₂-Kristalle können kleine gezüchtete Einkristalle oder Partikel von größeren gezüchteten Kristallen sein, wobei diese entsprechend zerkleinert, beispielsweise geschnitten, werden. Die Dotierung erfolgt im Ausgangsmaterial oder während der Kristallzüchtung in der Schmelze. Zur Dotierung kommt eine Vielzahl von Elementen in Frage, beispielsweise Lithium, Niob, Aluminium, Phosphor, Gallium, Bor, Arsen, Indium, Germanium, Iridium, Ruthenium, Rhodium, Antimon, Stickstoff, Mangan, Eisen, Kobalt, Nickel, Chrom oder Yttrium oder die Oxide oder die Fluoride der genannten Elemente. Besonders geeignet sind Iridium oder Ruthenium.

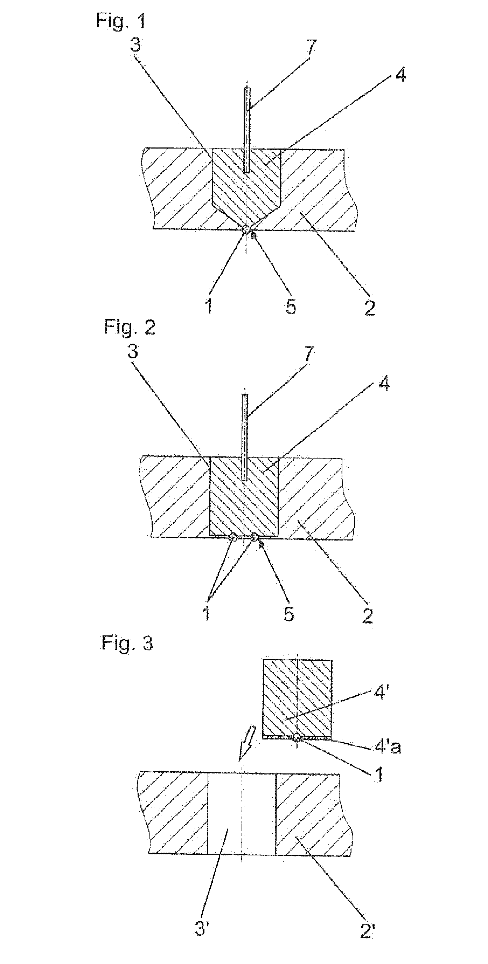

Bei der in Fig. 1 gezeigten Ausführung ist das Partikel 1 in einem Basiskörper 2 aus einem elektrisch isolierenden Material flüssigkeitsdicht gehalten und teilweise eingebettet, sodass es aus dem Basiskörper 2 etwas herausragt. Im Basiskörper 2 steht das Partikel 1 mit einer Hinterfüllung 4 aus elektrisch leitendem Material in Kontakt. Die Abmessungen, insbesondere die Dicke, des Basiskörpers 2, sind derart, dass das Verankern bzw. teilweise Einbetten des Partikels 1 und die elektrische Kontaktierung des Partikels 1, wie noch beschrieben wird, gewährleistet sind. Der Basiskörper 2 ist vorzugsweise aus zumindest einem chemisch stabilen Polymer hergestellt, beispielsweise aus Polytetrafluorethylen (Teflon), Polyvinylidenfluorid (PVDF), Perfluoralkoxylalkan (PFA), fluoriertem Ethylenpropylen (FEP), Ethylen-Tetrafluorethylen (ETFE), Polyetheretherketon (PEEK), Polyethylen (PE), Polypropylen (PP), Polyvinylchlorid (PVC), Polyphenylensulfid (PPS), PET (Polyethylenterephtalat) oder Polymethylmethacrylat (PMMA). Als Material für den Basiskörper 2 kommen auch andere elektrisch isolierende Materialien, wie Glas, Keramik (Al₂O₃) oder Gießharze, in Frage.

Ist der Basiskörper 2 aus einem oder mehreren der erwähnten Polymere hergestellt, kann durch ein mechanisches Bearbeitungsverfahren, wie Drehen, Fräsen oder Bohren, oder mittels Laser im Basiskörper 2 eine Vertiefung 3 erstellt werden, die beispielsweise trichterförmig, wie in Fig. 1 gezeigt, oder zylindrisch ausgeführt wird. Am Boden der Vertiefung 3 bzw. an deren tiefster Stelle beträgt die verbleibende Wandstärke im Basiskörper 2 in der Größenordnung des mittleren Durchmessers eines Partikels 1, kann jedoch auch etwas größer oder kleiner sein. Am Boden der Vertiefung 3 wird ein durchgehendes Loch 5, beispielsweise als Bohrung, angebracht, dessen Durchmesser ebenfalls in der Größenordnung des mittleren Durchmessers eines Partikels 1 beträgt. Gemäß einer alternativen Ausführungsform kann der Basiskörper 2 mitsamt Vertiefung 3 und Loch 5 im Spritzguss hergestellt sein. Im Loch 5 des Basiskörpers 2 wird von der Seite der Vertiefung 3 her oder von außen ein Partikel 1 platziert. Durch ein Aufschmelzen des Kunststoffmaterials im Bereich des Loches 5 wird das Partikel 1 im Basiskörper 2 vorzugsweise flüssigkeitsdicht verankert, sodass es aus dem Loch 5 geringfügig herausragt. Das Aufschmelzen des Kunststoffmaterials kann beispielsweise mittels eines in die Vertiefung 3 eingebrachten, auf das Partikel 1 drückenden und das Partikel 1 beheizenden metallischen Stiftes, Bolzen oder dergleichen erfolgen. Durch das Erhitzen wird der umliegende bzw. angrenzende Kunststoff erhitzt und aufgeschmolzen. Das Partikel 1 wird in die gewünschte Position im Basiskörper 2 geschoben und formschlüssig eingebunden, da der aufschmelzende Kunststoff die Freiräume zwischen dem Partikel 1 und der Lochwand ausfüllt.

Bei einem aus einem Gießharz, beispielsweise einem chemisch beständigen Epoxidharz hergestellten Basiskörper 2 wird das Partikel 1 auf analoge Weise eingebracht.

Bei einem Basiskörper 2 aus Keramik (Al₂O₃) können ebenfalls durch mechanische Bearbeitung sowohl die Vertiefung 3 als auch das Loch 5 erstellt werden. Der Durchmesser des Loches 5 muss ein Positionieren des Partikel 1 im Loch 5 gestatten, da Keramik nicht aufschmelzbar ist. Eine feste und insbesondere auch flüssigkeitsdichte Verbindung des Partikels 1 mit dem Basiskörper 2 kann nach einem der bekannten Verfahren zur flüssigkeitsdichten Verbindung von Metallteilen bzw. Metalldrähten an Keramikteilen erfolgen.

Des Weiteren ist es möglich, das Partikel 1 in einem Basiskörper 2 aus Glas zu verankern. Dazu kann ein aus Glas bestehendes Röhrchen verwendet werden, an dessen einen Ende das Partikel 1 positioniert wird. Zur flüssigkeitsdichten Verankerung des Partikels 1 kommen jene Verfahren in Frage, die für ein Verbinden von Glas mit Metalldrähten üblich sind.

Die rückseitig des verankerten Partikels 1 im Basiskörper 2 befindliche Vertiefung 3 wird mit einem elektrisch leitfähigen Material aufgefüllt und bildet ein Verschlusselement 4. Dieses Verschlusselement 4 wird insbesondere aus einem elektrisch leitenden Harz, insbesondere Epoxidharz, oder einem elektrisch leitenden Kleber, insbesondere einem Epoxidkleber, erstellt. Zur Erzielung der elektrischen Leitfähigkeit enthält das Harz bzw. der Kleber zumindest einen elektrisch leitenden Füllstoff, wie Kohlenstoff-Nanopartikel oder metallische Partikel, etwa aus Silber, Kupfer, Eisen, Nickel, Platin oder Kobalt. Vor der Aushärtung des Klebers bzw. Harzes wird in das Verschlusselement 4 ein elektrisches Kontaktelement 7, beispielsweise ein Drahtstück oder ein metallischer Stift gesteckt, welches bzw. welcher über das Verschlusselement 4 hinausragt. Alternativ oder zusätzlich kann das Partikel 1 direkt mit einem elektrischen Leiter verbunden werden. Dazu wird am Partikel 1 beispielsweise ein Stück Draht, vorzugsweise aus Titan, mittels Laser angeschweißt oder es wird mittels Laser ein winziges Loch im Diamantkorn 1 erstellt, das Ende eines Drahtes in das Loch eingefädelt und das Loch mit elektrisch leitendem Harz geschlossen. Dieser Draht wird durch das Verschlusselement 4 nach außen geführt oder mit einem weiteren Stück Draht, Stift, Bolzen oder dergleichen verbunden werden, welches bzw. welcher in das Verschlusselement 4 eingebracht worden ist.

Fig. 2 zeigt eine Ausführungsform mit einer Elektrode aus zwei Partikeln 1, die jeweils in einem Loch 5 am Boden der Vertiefung 3 des Basiskörpers 2 verankert sind. Die Vertiefung 3 ist beispielsweise zylindrisch ausgeführt und ebenfalls mit einem Verschlusselement 4 aus einem elektrisch leitendem Material befüllt. Im Verschlusselement 4 ist ein Kontaktelement 7 platziert. Ansonsten entspricht die in Fig. 2 gezeigte Ausführungsform jener gemäß Fig. 1. Bei weiteren, gesondert nicht gezeigten Ausführungsvarianten werden insbesondere bis zu fünf Partikel 1 im Basiskörper 2 verankert, welche und mit einer für alle Partikel 1 gemeinsamen Hinterfüllung in Kontakt stehen. Es ist grundsätzlich möglich, mehr als fünf Partikel pro Elektrode vorzusehen, ihre Anzahl wird jedoch durch den Aufwand der Platzierung im Basiskörper begrenzt, sodass es wenig Sinn macht, mehr als 10 bis 15 Partikel pro Elektrode zu verwenden.

Bei der in Fig. 3 gezeigten Ausführungsform ist ein Basiskörper 2' mit einer durchgehenden, beispielsweise zylindrischen, Öffnung 3' vorgesehen. Der Basiskörper 2' kann aus einem der bereits erwähnten, elektrisch nicht leitenden Materialien bestehen und, wie ebenfalls bereits beschrieben, hergestellt sein. In die Öffnung 3' wird ein Verschlusselement 4' eingesetzt, an welchem zumindest ein Partikel 1 verankert ist. Das Verschlusselement 4' ist daher ein beispielsweise zylindrischer, an die Öffnung 3' angepasster Teil. Das Verschlusselement 4' besteht aus einem elektrisch leitenden Material, beispielsweise aus elektrisch leitendem Harz oder Kleber, wie bereits beschrieben, oder aus Metall oder Graphit und ist an einer jener Flächen, die sich bei eingesetztem Verschlusselement 4' an der Außenseite des Basiskörpers 2' befinden, mit einer Folie 4'a aus elektrisch nicht leitendem Material beschichtet. Zur Herstellung des Verschlusselementes 4' wird beispielsweise eine Platte aus dem elektrisch leitenden Material an einer Seite mit einer dünnen, beispielsweise eine Stärke von 0,3 mm bis 0,5 mm aufweisenden Folie aus einem elektrisch isolierenden Material versehen. Die Folie kann aufgeklebt oder auflaminiert werden. Als Folienmaterial kommen die für den Basiskörper 2, 2' erwähnten Materialien in Frage. Aus der mit der Folie versehenen Platte werden die Verschlusselemente 4' ausgeschnitten oder ausgestanzt. An der Folie 4'a des Verschlusselementes 4' wird zumindest ein Partikel 1 verankert, indem die Folie 4'a lokal aufgeschmolzen wird und das Partikel 1 derart platziert wird, dass es zwar in Kontakt mit dem elektrisch leitenden Material eingebunden wird, jedoch aus der Folie 4'a herausragt. Das Verankern des/der Partikel(s) 1 kann vor oder nach dem Positionieren des Verschlusselementes 4' im Basiskörper 2' erfolgen. Das Verschlusselement 4' kann direkt elektrisch kontaktiert werden, beispielsweise kann auf der freien Außenseite des Verschlusselementes 4' eine Kupferfolie angebracht werden. Das Verschlusselement 4' wird in den Basiskörper 2' eingepresst oder eingeklebt und sollte für die meisten Anwendungen der erfindungsgemäßen Elektrolysezelle im Basiskörper 2' flüssigkeitsdicht sitzen.

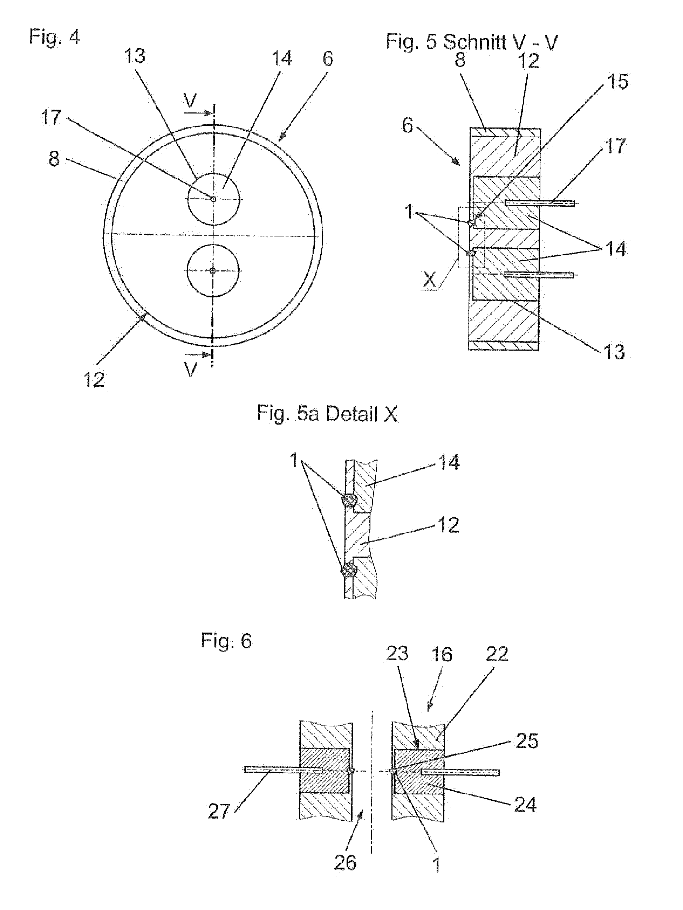

Fig. 4, Fig. 5 und Fig. 5a zeigen eine Ausführungsform einer unmittelbar im zu behandelnden Wasser positionierbaren Elektrolysezelle 6 mit zwei in einen einzigen Basiskörper 12 integrierten Partikeln 1 als Elektroden (Anode, Kathode). Der Basiskörper 12 ist bei der gezeigten Variante eine kleine Scheibe, welche beispielsweise einen Durchmesser von 10 mm bis 15 mm und eine Höhe von 3 mm bis 6 mm aufweist. Der Basiskörper 12 weist zwei zueinander gering beabstandete mittig angeordnete Vertiefungen 13 mit jeweils einem Loch 15 auf und ist aus zumindest einem der oben erwähnten Polymere, aus Epoxidharz oder aus Keramik, wie oben beschrieben, hergestellt. Wie insbesondere Fig. 5 in Verbindung mit Fig. 5a zeigt, sind die Vertiefungen 13 zylindrische Öffnungen mit einem Durchmesser von etwa 3 mm, die einen etwa 0,2 mm dünnen Boden im Basiskörper 12 belassen. Die Löcher 15 weisen einen Durchmesser von beispielsweise 0,3 mm auf. Bei der gezeigten Ausführungsform sind die Löcher 15 in den Vertiefungen 13 außermittig angeordnet. In jedes Loch 15 ist ein Partikel 1 eingebracht und auf eine der beschriebenen Weisen, beispielsweise durch Aufschmelzen des Kunststoffmaterials des Basiskörpers 12, flüssigkeitsdicht verankert. Anschließend sind die Vertiefungen 13 mit einem elektrisch leitenden Material, wie beschrieben als Verschlusselement 14 aufgefüllt. In jedem Verschlusselement 14 ist ein Draht, Stift oder dergleichen als Kontaktelement 17 verankert, welches die elektrische Kontaktierung des Partikel 1 ermöglicht. Der Basiskörper 12 kann an seiner Außenseite von einem Stützelement 8, etwa einem Stützring, umfasst sein. Das Stützelement 8 kann aus einem Metall, aus Glas, aus Keramik oder einem verstärkten Kunststoff bestehen. Wie bereits erwähnt wird die Elektrolysezelle 6 unmittelbar in das zu behandelnde Wasser, welches als Elektrolyt dient, eingebracht. Die Elektrolysezelle 6 eignet sich zur Elektrolyse von Wassermengen in der Größenordnung von bis 21, vorzugsweise bis zu 500 ml. Die Kontaktierung erfolgt mit Gleichstrom von beispielsweise 4 mA und 30 V.

Anstelle eines Diamantkorns 1 können pro Anode und pro Kathode mehrere Partikel 1, analog zu der in Fig. 2 gezeigten Ausführung und wie bereits beschrieben, vorgesehen sein. Die Elektroden können ferner gemäß dem in Fig. 3 gezeigten Ausführungsbeispiel ausgeführt bzw. hergestellt sein.

Bei der in Fig. 6 gezeigten Ausführungsvariante einer Elektrolysezelle 16 ist der Basiskörper 22 in der Gestalt einer zylindrischen Hülse mit einem Außendurchmesser von 10 mm bis 15 mm und einer Wandstärke von 2 mm bis 5 mm ausgeführt. Der Basiskörper 22 besteht beispielsweise aus zumindest einem der erwähnten Kunststoffe und weist ausgehend von der Hülsenaußenseite Vertiefungen 23 auf, welche über je ein Loch 25 mit dem mittigen Kanal 26 des Basiskörpers 22 verbunden sind. Die Vertiefungen 23 und die von den Vertiefungen 23 zum mittigen Kanal 26 reichenden Löcher 25 sind an der Hülsenwand einander diametral gegenüberliegend angeordnet. Die Vertiefungen 23 und die Löcher 25 können analog zur Ausführungsform gemäß Fig. 3, 4 und 4a ausgeführt sein. In jedes Loch 25 ist ein Partikel 1 eingebracht und flüssigkeitsdicht, etwa durch Aufschmelzen des Kunststoffmaterials, verankert, sodass die Partikel 1 in den mittigen Kanal 26 ragen. Die Vertiefungen 23 sind mit elektrisch leitendem Material als Verschlusselement 24, wie oben beschrieben, aufgefüllt. Zur Kontaktierung der Partikel 1 sind in den Verschlusselementen 24 Drähte, Stifte oder dergleichen als Kontaktelemente 27 verankert. Die Elektrolysezelle 16 wird vom zu behandelnden Wasser durchströmt. Der Betrieb der Elektrolysezelle 16 kann daher die Verwendung einer den Durchfluss sicherstellenden Pumpe erfordern. Auch bei der Elektrolysezelle 16 können pro Anode und pro Kathode mehrere Partikel vorgesehen sein, in einer Anordnung analog zu Fig. 2 und wie bereits beschrieben. Die Elektroden können bei dieser Variante ebenfalls gemäß dem in Fig. 3 gezeigten Ausführungsbeispiel ausgeführt bzw. hergestellt sein.

Insbesondere bei einer mittig durchströmten Elektrolysezelle können in einem einzigen Basiskörper mehrere Anoden und Kathoden gleicher Anzahl und gleicher Ausführung, wie beschrieben, vorgesehen sein.

Bei den in Fig. 4 und Fig. 6 gezeigten Ausführungsformen von Elektrolysezellen 6, 16 sind Anode(n) und Kathode(n) in einen einzigen Basiskörper integriert. Bei einer weiteren, nicht gezeigten Ausführungsform der Erfindung kann die Elektrolysezelle zwei Basiskörper aufweisen, wobei in dem einen Basiskörper zumindest eine Anode und in dem anderen Basiskörper zumindest eine Kathode - Anode(n) und Kathode(n) jeweils mit zumindest einem Partikel - angeordnet ist bzw. sind. Die beiden Basiskörper können in einer gemeinsamen Halterung positioniert werden. Darüber hinaus ist es möglich, beliebig viele Basiskörper mit jeweils einer Anode und gleich viele Basiskörper mit jeweils einer Kathode miteinander zu kombinieren und hintereinander zu schalten. Auch mehrere Basiskörper mit Anode und Kathode können in beliebiger Anzahl miteinander kombiniert werden.

Die Elektrolysezellen gemäß der Erfindung nützen auf besonders effektive Weise elektrischen Strom, um Mittel zur Desinfektion des Wassers direkt im Wasser durch elektrochemische Umwandlung von Wasser oder von eingetragenen Wasserinhaltsstoffen zu erzeugen, sodass beispielsweise Desinfektionsmittel auf Sauerstoff- und Chlorbasis gebildet werden.

### Bezugsziffernliste

1 ..... Partikel
2 ..... Basiskörper
2' ..... Basiskörper
3 ..... Vertiefung
3' ..... Öffnung
4 ..... Verschlusselement
4' ..... Verschlusselement
4'a ..... Folie
5 ..... Loch
6 ..... Elektrolysezelle
7 ..... Kontaktelement
8 ..... Stützelement
12 ..... Basiskörper
13 ..... Vertiefung
14 ..... Verschlusselement
15 ..... Loch
16 ..... Elektrolysezelle
17 ..... Kontaktelement
22 ..... Basiskörper
23 ..... Vertiefung
24 ..... Verschlusselement
25 ..... Loch
26 ..... Kanal
27 ..... Kontaktelement

## Patentansprüche

1. Elektrolysezelle mit zumindest zwei elektrisch kontaktierbaren Elektroden - Anode und Kathode, aus elektrisch leitfähigen (dotierten) Partikeln (1),
**dadurch gekennzeichnet,**
**dass** die Elektroden jeweils aus zumindest einem Partikel (1) bestehen, welches in elektrisch nicht leitendem Material, aus diesem herausragend, verankert ist und mit einem Verschlusselement (4, 4', 14, 24) aus elektrisch leitendem Material in Kontakt steht, welches eine Öffnung (3') oder Vertiefung (3, 13, 23) in einem Basiskörper (2, 2', 12, 22) aus elektrisch nicht leitendem Material flüssigkeitsdicht ausfüllt.

2. Elektrolysezelle nach Anspruch 1, **dadurch gekennzeichnet, dass** das/die Partikel (1) im elektrisch nicht leitenden Material flüssigkeitsdicht verankert ist bzw. sind, wobei vorzugsweise die aus zumindest einem Partikel (1) bestehenden Elektroden in einem einzigen Basiskörper (2, 2', 12, 22) angeordnet sind.

3. Elektrolysezelle nach Anspruch 1 oder 2, **dadurch gekennzeichnet, dass** das/die Partikel (1) im Basiskörper (2, 2', 12, 22) selbst, welcher insbesondere aus einem Kunststoffmaterial, aus Keramik oder aus Glas besteht, oder in einer mit dem Verschlusselement (4') verbundenen Folie (4'a) oder dergleichen verankert ist bzw. sind.

4. Elektrolysezelle nach einem der Ansprüche 1 bis 3, **dadurch gekennzeichnet, dass** jede Elektrode aus zumindest zwei, insbesondere aus bis zu fünf, separat verankerten Partikeln (1) besteht, welche mit einem gemeinsamen Verschlusselement (4, 4') in Kontakt sind.

5. Elektrolysezelle nach einem der Ansprüche 1 bis 4, **dadurch gekennzeichnet, dass** jedes Partikel (1) in einem Loch (5, 15, 25) verankert ist, welches am Boden der im Basiskörper (2, 12, 22) angeordneten Vertiefung (3, 13, 23) ausgebildet ist, welche vorzugsweise mit dem elektrisch leitenden Material des Verschlusselementes (4, 14, 24) aufgefüllt ist.

6. Elektrolysezelle nach einem der Ansprüche 1 bis 5, **dadurch gekennzeichnet, dass** der Basiskörper (2, 2', 12, 22) bzw. die Folie (4'a) des Verschlusselementes (4') aus zumindest einem der Polymere aus der Gruppe Polytetrafluorethylen (Teflon), Polyvinylidenfluorid (PVDF), Perfluoralkoxylalkan (PFA), fluoriertem Ethylenpropylen (FEP), Ethylen-Tetrafluorethylen (ETFE), Polyetheretherketon (PEEK), Polyethylen (PE), Polypropylen (PP), Polyvinylchlorid (PVC), Polymethylmethacrylat (PMMA), PET (Polyethylenterephtalat) oder Polyphenylensulfid (PPS) besteht.

7. Elektrolysezelle nach einem der Ansprüche 1 bis 6, **dadurch gekennzeichnet, dass** das Verschlusselement (4, 4', 14, 24) aus einem elektrisch leitenden Harz, insbesondere einem zumindest einen elektrisch leitenden Füllstoff beinhaltenden Epoxidharz, oder aus einem Kleber, insbesondere einem zumindest einen elektrisch leitenden Füllstoff beinhaltenden Epoxidkleber, oder aus Metall oder Graphit besteht.

8. Elektrolysezelle nach einem der Ansprüche 1 bis 7, **dadurch gekennzeichnet, dass** die Partikel (1) entweder Diamantkörner sind, welche Durchmesser von 100 µm bis 500 µm, insbesondere von 200 µm bis 350 µm, aufweisen, wobei die Diamantkörner (1) insbesondere Einkristalle oder ausgeschnittene Teilchen einer gemäß dem CVD-Verfahren hergestellten Diamantelektrode sind, oder TiO₂-Kristallpartikel mit Korngrößen zwischen 300 µm und 5mm, insbesondere bis zu 2 mm, sind.

9. Elektrolysezelle nach einem der Ansprüche 1 bis 8, **dadurch gekennzeichnet, dass** zumindest eines der Partikel (1) mit einem elektrischen Leiter verbunden ist oder dass im Verschlusselement (4, 14, 24) ein Kontaktelement (7, 17, 27), beispielsweise ein Draht, ein Stift oder dergleichen, mit einem seiner Enden gehalten ist.

10. Elektrolysezelle nach einem der Ansprüche 1 bis 9, **dadurch gekennzeichnet, dass** der Basiskörper (12, 22) als Plättchen, Scheibe oder dergleichen oder als Hülse, Ring oder dergleichen mit einem mittigen Durchflusskanal (26) ausgeführt ist, wobei die die Elektroden bildenden Partikel (1) in den Durchflusskanal (26) hinein ragend im Basiskörper (22) oder am Verschlusselement (4') verankert sind.

11. Verfahren zur Herstellung einer Elektrolysezelle oder eines eine Elektrode aufweisenden Bestandteiles einer Elektrolysezelle,
**dadurch gekennzeichnet,**
**dass** ein Basiskörper (2) aus zumindest einem Polymer mit zumindest einer Vertiefung (3) und mit zumindest einem durchgehenden Loch (5) am Boden der Vertiefung (3) erstellt wird, in jedem Loch (5) ein elektrisch leitfähiges (dotiertes) Partikel (1) platziert wird und unter Druckausübung auf das Partikel (1) und durch Erhitzen des das Partikel (1) umgebenden Materials des Basiskörpers (2) dieses Material erhitzt und aufgeschmolzen wird, sodass das Partikel (1) im Basiskörper (2) vorzugsweise flüssigkeitsdicht eingebettet wird und aus dem Loch (5) herausragt, wobei anschließend die Vertiefung (3) mit elektrisch leitendem, aushärtendem Material befüllt wird.

12. Verfahren zur Herstellung einer Elektrolysezelle oder eines eine Elektrode aufweisenden Bestandteiles einer Elektrolysezelle,
**dadurch gekennzeichnet,**
**dass** ein Basiskörper (2') aus einem elektrisch nicht leitendem Material mit zumindest einer durchgehenden Öffnung (3') hergestellt wird, in der Öffnung (3') ein Verschlusselement (4') aus einem elektrisch nicht leitendem Material flüssigkeitsdicht eingesetzt wird, welches an der einen, die Öffnung (3') verschließenden Fläche mit einer Folienschicht (4'a) aus einem elektrisch nicht leitenden Material versehen ist, in welcher durch lokales Aufschmelzen zumindest ein elektrisch leitfähiges (dotiertes) Partikel (1) in Kontakt mit dem elektrisch leitenden Material des Verschlusselementes (4') und der Folie (4'a) sowie aus der Folie (4'a) herausragend vorzugsweise flüssigkeitsdicht verankert wird.

13. Verfahren nach Anspruch 11 oder 12, **dadurch gekennzeichnet, dass** der Basiskörper (2, 2') im Spritzguss hergestellt wird, wobei vorzugsweise die Vertiefung (3) mitsamt Loch (5) bzw. Löchern oder die Öffnung (4') beim Spritzgießen des Basiskörpers (2, 2') oder durch mechanische Bearbeitung des Basiskörpers (2, 2') oder mittels Laser erstellt erstellt wird bzw. werden.

14. Verfahren nach Anspruch 13, **dadurch gekennzeichnet, dass** das Partikel (1) bzw. die Partikel (1) mit (jeweils) einem elektrischen Leiter verbunden wird bzw. werden oder dass im elektrisch leitenden Material vor dessen Aushärten ein Kontaktelement (7) positioniert wird.

15. Verfahren nach einem der Ansprüche 11 bis 14, **dadurch gekennzeichnet, dass** die Partikel (1) entweder Diamantkörner sind, welche Durchmesser von 100 µm bis 500 µm, insbesondere von 200 µm bis 350 µm, aufweisen, wobei die Diamantkörner (1) insbesondere Einkristalle oder ausgeschnittene Teilchen einer gemäß dem CVD-Verfahren hergestellten Diamantelektrode sind, oder TiO₂-Kristallpartikel mit Korngrößen zwischen 300 µm und 5mm, insbesondere bis zu 2 mm, sind.
